Europäisches Patentamt

European Patent Office

Office européen des brevets

(11) Numéro de publication: **0 371 888**
**A2**

(12) # DEMANDE DE BREVET EUROPEEN

(21) Numéro de dépôt: **89420445.2**

(22) Date de dépôt: **16.11.89**

(51) Int. Cl.⁵: **A01G 9/10**

(30) Priorité: **29.11.88 FR 8816270**

(43) Date de publication de la demande:
**06.06.90 Bulletin 90/23**

(84) Etats contractants désignés:
**AT BE CH DE ES GB GR IT LI LU NL SE**

(71) Demandeur: **Barthelemy, Jean**
**B.P. No. 36 Veyrines**
**F-43601 Sainte Sigolène(FR)**

(72) Inventeur: **Barthelemy, Jean**
**B.P. No. 36 Veyrines**
**F-43601 Sainte Sigolène(FR)**

(74) Mandataire: **Dupuis, François**
**Cabinet Charras, 3 Place de l'Hôtel-de-Ville,**
**BP 203**
**F-42005 St. Etienne Cédex 1(FR)**

(54) Elément de support de godets, notamment pour la culture de plants ou de fleurs.

(57) Cet élément réalisé à partir d'une plaque (1), présentant une pluralité d'empreintes en creux (1a), correspondant à la section des godets et disposées de manière à permettre le positionnement ordonné et séparé desdits godets, est remarquable en ce ladite plaque (1) est d'épaisseur réduite et présente des pieds (1b) de surélévation par rapport au sol.

FIG.1

EP 0 371 888 A2

## Elément support de godets, notamment pour la culture de plants ou de fleurs.

Il est connu d'utiliser pour la culture de plants de pépinières, de fleurs ou autres des éléments supports présentant une pluralité d'empreintes pour le positionnement ordonné et séparé des godets recevant ledit plants ou fleurs.

De tels éléments supports permettent la manipulation de l'ensemble des godets, en une seule opération.

Généralement, ces éléments supports sont éxecutés à partir d'une plaque relativement épaisse, d'environ au moins 5 cm, en polystyrène expansé, et présentent certains inconvénients.

Un premier inconvénient apparait au niveau de l'épaisseur de la plaque qui génère un volume important pour le stockage de plusieurs plaques.

Or il s'avère nécessaire que la plaque, compte-tenu de sa conformation, présente une certaine épaisseur qui ne peut être réduite, étant donné que dans certains cas, les godets ne doivent pas être en contact direct avec le sol.

A cet effet, les empreintes de la plaque présentent une faible conicité.

Un autre inconvénient important résulte du matériau constituant la plaque. D'une part, le polystyrène est un matériau fragile et, d'autre part, le polystyrène présente une certaine porosité de sorte que les éventuels parasites que peuvent présenter les plantes, sont susceptibles de s'incruster dans la plaque et contaminer d'autres plans lors d'une nouvelle utilisation de la plaque.

L'invention s'est fixée pour but de remédier à ces inconvénients, d'une manière simple et efficace.

Pour résoudre le problème posé du stockage de l'élément support, tout en permettant aux godets, pour certains types de plans, de ne pas être en contact direct avec le sol, ledit élément est réalisé à partir d'une plaque ajourée de faible épaisseur et présentant des pieds de surélévation par rapport au sol.

Les pieds son conformés pour permettre d'empilage en juxtaposition des plaques.

Avantageusement, les pieds sont tronconiques et creux.

En outre, les pieds sont formés à partir des bords de la plaque et/ou des parties d'intersection des empreintes.

Pour résoudre le problème posé de la fragilité de l'élément support et d'éviter tout risque d'incrustation de parasites, la plaque est réalisée en patière plastique du type polyéthylène ou polypropylène injecté.

L'invention est exposée ci-après plus en détail, à l'aide du dessin annexé dans lesquels :

- La figure 1 est une vue en perspective d'une forme de réalisation de l'élément support.

- La figure 2 est une vue en coupe partielle montrant le positionnement des godets.

- La figure 3 est une vue en coupe montrant l'empilage des éléments.

- La figure 4 est une vue partielle montrant la superposition de plusieurs plaques avec des organes entretoise, pour leur transport avec les godets recevant les différents plants.

L'élément support comprend une plaque (1), généralement de forme rectangulaire ou carrée, et qui présente une pluralité d'empreintes en creux (1a) disposées de manière à permettre le positionnement ordonné et séparé des godets (G).

La forme des empreintes (1a) correspond au profil externe des godets et peut être carrée, rectangulaire, ronde, polygonale...

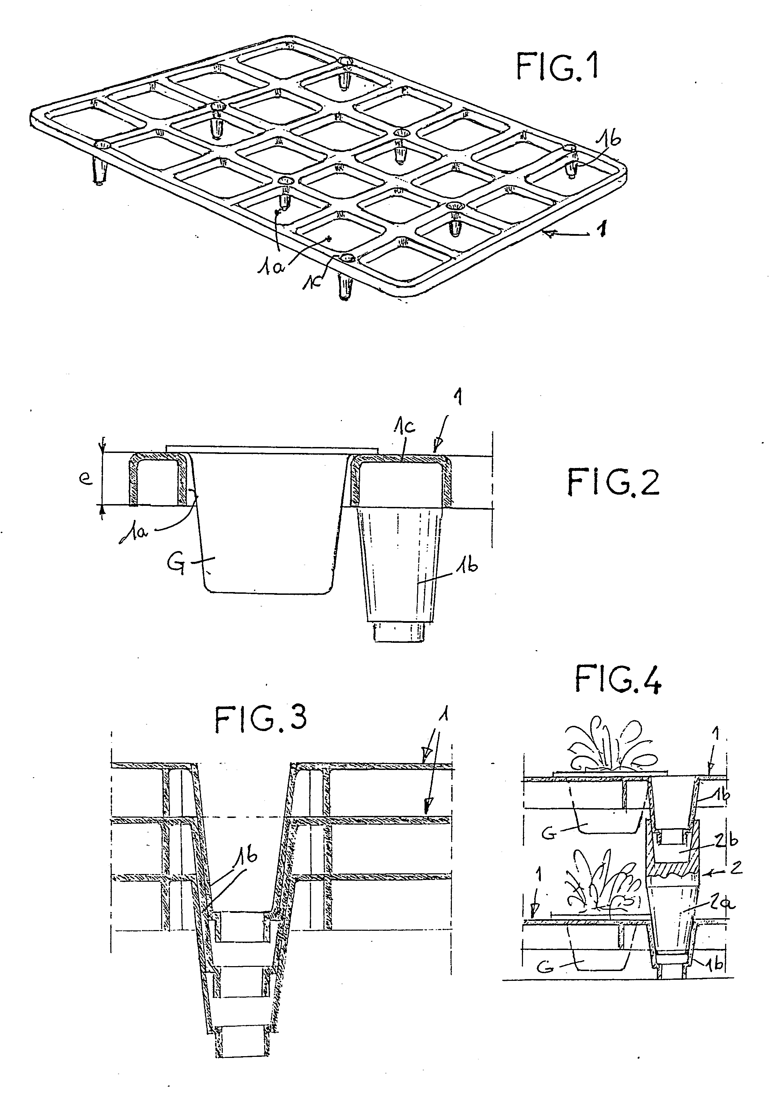

Selon l'invention la plaque (1) est d épaisseur (e) réduite et présente des pieds (1b) d'appui au sol permettant de surélever d'une manière suffisante ladite plaque en évitant aux godets, si celà est nécessaire, d'être en contact avec le sol (figure 2).

Les pieds (1b) sont formés à partir des bords de la plaque et/ou des parties d'intersection (1c) des empreintes (1a).

Comme le montre la figure 3, les pieds (1b) sont conformés pour permettre l'empilage en juxtaposition des plaques (1).

Avantageusement, les pieds (1b) sont creux et de profil tronconique.

L'ensemble des éléments supports, c'est-à-dire, la plaque (1) et les pieds (1b) est obtenu par injection d'une matière plastique du type polyéthylène, polypropylène.

L'élément support tel que défini, peut avantageusement être complété par des organes indépendants (2) faisant office d'entretoise lors de la superposition de plusieurs plaques (1).

Ces organes entretoise (2) sont conformés pour être emboités dans les pieds (1b). Par exemple, les organes (2) sont de forme générale cylindrique avec une extrémité tronconique (2a) déstinée à coopérer avec les pieds (1b) tandis que l'autre extrémité présente une empreinte en creux (2b) conformée pour permettre l'appui et le positionnement de la partie inférieure des pieds d'une autre plaque superposée.

Ces dispositions permettent le transport de plusieurs plaques superposées avec les godets recevant les différents plants.

Les organes entretoise (2) peuvent être constitués par des séries de différentes hauteur, pour faire varier l'écartement entre plusieurs plaques en fonction de la hauteur des plants transportés.

Les avantages ressortent bien de la description.

## Revendications

-1- Elément support de godets, notamment pour culture de plants ou de fleurs, réalisé à partir d'une plaque (1), présentant une pluralité d'empreintes en creux (1a), correspondant à la section des godets et disposées de manière à permettre le positionnement ordonné et séparé desdits godets, caractérisé en ce que ladite plaque (1) est d'épaisseur réduite et présente des pieds (1b) de surélévation par rapport au sol.

-2- Elément selon la revendication 1, caractérisé en ce que les pieds (1b) sont conformés pour permettre l'empilage en juxtaposition des plaques.

-3- Elément selon la revendication 2, caractérisé en ce que les pieds (1b) sont tronconiques et creux.

-4- Elément selon la revendication 1, caractérisé en ce que les pieds (1b) sont formés à partir des bords de la plaque (1) et/ou des parties d'intersection des empreintes.

-5- Elément selon la revendication 1, caractérisé en ce qu'il est réalisé en matière plastique du type polyéthylène ou polypropylène injecté.

-6- Elément selon l'une quelconque des revendications 1 à 5, caractérisé en ce que les pieds (1b) sont aptes à recevoir des organes (2) faisant office d'entretoise pour assurer, en combinaison, le positionnement étagé et à écartement de plusieurs plaques avec les différents godets recevant les plants.

-7- Elément selon la revendication 6, caractérisé en ce que les organes (2) sont de forme générale cylindrique avec une extremité tronconique (2a) destinée à coopérer avec les pieds (1b) tandis que l'autre extrémité présente une empreinte en creux (2b) conformée pour permettre l'appui et le positionnement de la partie inférieure des pieds d'une autre plaque superposée.

FIG.1

*1b*

*1a*

*1c*

*1*

FIG.2

*1c*

*1*

*e*

*1a*

*G*

*1b*

FIG.4

FIG.3

*1*

*1b*

*1b*

*G*

*2b*

*2*

*2a*

*1*

*G*

*1b*